# EUROPÄISCHE PATENTANMELDUNG

(11) **EP 2 103 504 A1**
(43) Veröffentlichungstag der Anmeldung: **23.09.2009**
(21) Anmeldenummer: 08102765.8
(22) Anmeldetag: 19.03.2008
(51) Int. Cl.: B62D 33/04

(54) **Kofferaufbau eines Nutzfahrzeugs mit einem der Stirnseite und/oder Rückseite zugeordneten Rahmenelement**

(71) Anmelder: Schmitz Cargobull AG, 48341 Altenberge (DE)
(72) Erfinder: Hessling, Alfons, 48683 Ahaus (DE); Küpers, Josef, 48703 Stadtlohn (DE); Liesbrock, Werner, 48691 Vreden (DE)
(74) Vertreter: Cohausz & Florack

(57) **Zusammenfassung**

Die Erfindung betrifft einen Kofferaufbau (1) eines Nutzfahrzeuge (N), mit zwei Seitenwandpaneelen (2), einem Dachpaneel (4) und wenigstens einem einer Stirnseite (8) und/oder einer Rückseite (5) des Kofferaufbaus (1) zugeordneten Rahmenelement (20,40,60,101), wobei das Rahmenelement (20,40,60,101) zwei sich entlang der Seitenwandpaneele (2) erstreckende Seitenwandabschnitte (49,62,105,106) und einen sich entlang des Dachpaneels (4) erstreckenden Dachabschnitt (22,41,107) aufweist und wobei der Dachabschnitt (22,41,107) an gegenüber liegen Enden jeweils durch einen Eckabschnitt (23,113) mit einem Seitenwandabschnitt (49,62,105,106) verbunden ist. Um einen Kofferaufbau mit wenigstens einem einer Stirnseite und/oder einer Rückseite zugeordneten Rahmenelement zu schaffen, der einfach, schnell und kostengünstig gefertigt werden kann, ist vorgesehen, dass jeder Eckabschnitt (23,113) durch Biegen um eine Achse senkrecht sowohl zum benachbarten Seitenwandabschnitt (49,62,105,106) als auch zum Dachabschnitt (22,41,107) geformt ist.

## Beschreibung

Die Erfindung betrifft einen Kofferaufbau eines Nutzfahrzeugs, mit zwei Seitenwandpaneelen, einem Dachpaneel und wenigstens einem einer Stirnseite und/oder einer Rückseite des Kofferaufbaus zugeordneten Rahmenelement, wobei das Rahmenelement zwei sich entlang der Seitenwandpaneele erstreckende Seitenwandabschnitte und einen sich entlang des Dachpaneels erstreckenden Dachabschnitt aufweist und wobei der Dachabschnitt an gegenüber liegen Enden jeweils durch einen Eckabschnitt mit einem Seitenwandabschnitt verbunden ist.

Derartige Kofferaufbauten von Nutzfahrzeugen mit so genannten Rückwand- bzw. Stirnwandrahmen sind in verschiedenen Ausführungen bekannt. Die Rückwand- bzw. Stirnwandrahmen bilden dabei ein separates Bauteil des Kofferaufbaus und werden als solche an zwei Seitenwandpaneelen und einem Dachpaneel des Kofferaufbaus montiert. Die Rahmen weisen dementsprechend zwei Seitenwandabschnitte und einen Dachabschnitt als separate Bauteile auf. Jeder Seitenwandabschnitt ist über einen dazwischen liegenden Eckabschnitt mit dem Dachabschnitt derart verbunden, dass der Rahmen nach außen geschlossen und abgedichtet ist, wozu in der Regel eine geeignete Dichtung montiert wird. In den Eckabschnitten werden zudem meist so genannte Eckverstärker montiert, welche zur Verstärkung der Ecken des entsprechenden Rahmens dienen.

Die entsprechend vormontierten Rahmen werden auf die Seitenwandpaneele und das Dachpaneel aufgesteckt und dort verschraubt oder vernietet. An die Rahmen können anschließend noch Türen, Rolltore oder dergleichen angebracht werden. Im Falle eines Stirnwandrahmens wird entweder mit dem Aufstecken des Stirnwandrahmens oder anschließend die Stirnwand mit dem Kofferaufbau fest verbunden.

Nachteilig an den bekannten Rahmenelementen ist jedoch, dass diese zu einem nicht unerheblichen Teil zu den Fertigungskosten des gesamten Kofferaufbaus beitragen. Dies ist insbesondere auch dem hohen Arbeitsaufwand beim Fertigen und Anbringen der Rahmen an den Kofferaufbau geschuldet.

Vor diesem Hintergrund liegt der Erfindung die Aufgabe zu Grunde, einen Kofferaufbau mit wenigstens einem einer Stirnseite und/oder einer Rückseite zugeordneten Rahmenelement zu schaffen, der einfach, schnell und kostengünstig gefertigt werden kann.

Diese Aufgabe ist erfindungsgemäß durch die Lehre des Anspruchs 1 gelöst worden. In den auf den Anspruch 1 rückbezogenen Ansprüchen sind vorteilhafte Ausgestaltungen dieser Lehre angegeben.

Der Erfindung liegt die Erkenntnis zugrunde, dass die Seitenwandabschnitte mit dem Dachabschnitt eines Rahmenelements eines Kofferaufbaus besser schon von Anfang an, jedenfalls bezogen auf ein Profil des Rahmenelements, miteinander verbunden sind. Es werden also an einem lang gestreckten Rahmenelement, das wegen seiner geradlinigen Form leicht zu handhaben ist, möglicht viele ohnehin notwendige Arbeitsschritte durchgeführt, bevor das Rahmenelement in den Eckabschnitten umgebogen wird. Dies geht nicht nur einfach und schnell, die Arbeiten können auch in hohem Maße automatisiert werden, wozu keine besondere Anlagentechnik erforderlich ist.

Eine ähnliche Vorkonfektionierung ist zwar auch bei bekannten Rahmenelementen möglich, wenn diese erst kurz vor dem Anbringen an den Kofferaufbau aus Einzelteilen zusammengesetzt werden. Dieses Zusammensetzen ist dann allerdings viel aufwändiger als das bloße Umbiegen des Rahmenelements im Bereich der Eckabschnitte.

Die Erfindung erlaubt es zudem, mit immer gleichen, standardisierten Komponenten zu arbeiten, was einfach ist und doch eine hohe Flexibilität ermöglicht. Das Rahmenelement wird beispielsweise einfach auf die entsprechende Länge zugeschnitten und mit Bohrungen versehen. An diesen Bohrungen können dann je nach zu fertigendem Kofferaufbau bestimmte Bauteile befestigt werden. Ist dies abgeschlossen, muss das Rahmenelement nur noch umgebogen werden, bis die typische U-Form des Rahmens erreicht ist. Danach kann das Rahmenelement mehr oder weniger unmittelbar verbaut werden. Transporte oder andere Arbeitsschritte, die aufgrund der Größe gewöhnlicher Rahmen sehr umständlich sind, können so vermieden werden.

Die Vorfertigung der Rahmenelemente aus lang gestreckten Profilen erlaubt die Fertigung sehr vieler Rahmenelemente auf engstem Raum und in kürzester Zeit. Bei dieser Art der Fertigung stellt auch die Fertigung in parallelen Linien kein Problem mehr dar. Darüber hinaus kann bedarfsweise auch ein Arbeitsschritt zur Abdichtung der Eckabschnitte des Rahmenelements wegfallen.

Im Ergebnis hat die Erfindung also erkannt, dass durch eine vermeintlich kompliziertere Ausgestaltung des Rahmenelements, bei der das Rahmenelement eine sehr große Länge aufweist, dennoch eine Vereinfachung und Beschleunigung der Fertigung sowie eine damit einhergehende Kostenreduzierung erreicht werden kann.

Unter dem Begriff Nutzfahrzeuge im Sinne der Erfindung werden grundsätzlich alle Fahrzeuge zum Transport von Gütern, so genannte Transportfahrzeuge, verstanden. Insbesondere handelt es sich bei den Nutzfahrzeugen aber um Lastkraftwagen, deren Anhänger oder Auflieger, die auch als Trailer bezeichnet werden.

Das Rahmenelement muss nicht einstückig sein, auch wenn das bevorzugt sein kann. Es kann als Eckabschnitt auch ein Zwischenprofil eingesetzt oder aufgesetzt werden, wobei sich als Verbindung mit dem restlichen Teil des Rahmenelements eine Verschraubung oder Verklebung anbietet. Das Zwischenprofil lässt sich wegen einer anderen Form und/oder einem anderen Material leichter umbiegen. Es handelt sich daher vorzugsweise um einen flächigen Materialstreifen, der ähnlich einem Filmscharnier wirkt. Im Falle eines Rahmenelements aus Kunststoff kann das Zwischenprofil durch Verschweißen verbunden werden. Bei einem Materialstreifen kommt im Eckabschnitt noch ein Zusatzprofil in Frage, welches dann mit dem Zwischenprofil, verbunden wieder vorzugsweise ein hohlprofilartiges Rahmenelement bildet. Bei dem Zusatzprofil kann es sich um eines von mehreren inneren Teilprofilen handeln.

Wenn ein Zwischenprofil vorgesehen ist, wird das Rahmenelement im Bereich des Eckabschnitts jedenfalls bereichsweise unterbrochen. Die Unterbrechung wird vom Zwischenprofil überbrückt und kann sehr schmal sein. Im gebogenen Zustand können die von dem Zwischenprofil verbundenen Teile des Rahmenelements in Kontakt miteinander stehen. In einem solchen Fall kann gegebenenfalls auch auf ein Zusatzprofil verzichtet werden.

Eine erste vorteilhafte Ausgestaltung der Erfindung sieht vor, dass das Rahmenelement ein im Wesentlichen geschlossenes Hohlraumprofil umfasst. Das Rahmenelement selbst kann auch ein Hohlprofil sein. In dem dann leichten Hohlprofil können ohne weiteres Komponenten zur Verstärkung der Rahmenstruktur oder dergleichen eingebracht werden.

Das Rahmenelement kann insbesondere dann, wenn es ein Hohlprofil umfasst oder ist, aus einem äußeren Teilprofil und wenigstens einem inneren Teilprofil zusammengesetzt sein, was die Fertigung wesentlich vereinfacht. Dann bildet das äußere Teilprofil vorzugsweise das durchgängige Teilprofil, was sich von einem Ende des Rahmenelements zum anderen Ende des Rahmenelements erstreckt. Folglich bildet insbesondere auch das äußere Teilprofil die umgebogenen Eckabschnitte.

Ein weiterer Vorteil besteht beispielsweise darin, dass Rahmenelemente für unterschiedliche Anwendungen in unterschiedlichen Wandstärken oder Ausführungen ohne weiteres unter Verwendung eines standardisierten Baukastenprinzips und somit mit einer minimalen Anzahl unterschiedlicher Komponenten hergestellt werden können. Es müssen also für unterschiedliche Kofferaufbauten nicht unterschiedliche, jeweils speziell hergestellte Rahmenprofilelemente bereitgestellt werden.

Beispielsweise können das innere Teilprofil und das äußere Teilprofil in standardisierten Maßen gefertigt werden, die dann untereinander zu einer Vielzahl verschiedener Rahmenelemente kombiniert werden können. Es kann auch vorgesehen sein, dass das äußere Teilprofil in unterschiedlichen Verwendungen stets identisch bleibt und mit einem inneren Teilprofil kombiniert wird, welches die jeweils erforderliche Funktionalität des Rahmenelements bereitstellt. Dann müssen für die verschiedenen Anwendungen nur unterschiedliche innere Teilprofile bereitgestellt werden, was kostengünstiger ist, als die gesamten Rahmenelemente für die unterschiedlichen Verwendungen bereitzustellen. Das innere Teilprofil kann beispielsweise zur Verwendung mit einem ein Rolltor, eine Ladebordwand, wenigstens eine Tür aufweisenden Kofferaufbau vorgesehen sein.

Eine weitere Ausgestaltung der Erfindung sieht vor, dass das äußere Teilprofil einen Teil einer äußeren Hülle des Kofferaufbaus bildet. Dieser Teil kann in einer Ebene wenigstens eines Seitenwandpaneels und/oder des Dachpaneels liegen. Dadurch wird ein einfacher Aufbau des Rahmenelements erreicht. Es sind keine weiteren Teilprofile, Blenden oder dergleichen notwendig, um den äußeren Abschluss des Rahmenelements herzustellen.

Alternativ oder zusätzlich kann das wenigstens eine innere Teilprofil einen Teil einer inneren Hülle des Kofferaufbaus bilden. Dadurch werden die gleichen Vorteile erzielt wie bei dem äußeren Teilprofil als Teil der äußeren Hülle des Kofferaufbaus. Dementsprechend ist es besonders bevorzugt, wenn das äußere Teilprofil und das wenigstens eine innere Teilprofil die äußere Hülle des Rahmens bilden, die dann durch bloßes Verbinden des äußeren Teilprofils mit dem wenigstens einen inneren Teilprofil hergestellt werden kann. Die innere Hülle bezieht sich auf das Innere des geschlossenen Kofferaufbaus.

Eine besonders einfache Fertigung wird insbesondere dann sichergestellt, wenn das Rahmenelement oder das äußere Teilprofil aus einem lang gestreckten Profil durch Umbiegen des Profils an den Eckabschnitten im Wesentlichen um 90° gefertigt ist.

Bei dem Rahmenelement, dem äußeren Teilprofil und/oder dem wenigstens einem inneren Teilprofil handelt es sich vorzugsweise um ein stranggepresstes oder extrudiertes Profil. Dadurch können die gewünschten Profilgeometrien leicht und kostengünstig erzeugt werden. Dann wird in Kauf genommen, dass Profilgeometrien beim Biegen meist störend wirken.

Alternativ oder zusätzlich kann das Rahmenelement, das wenigstens eine innere Teilprofil und/oder äußere Teilprofil aus einem thermoplastischen Kunststoffmaterial, vorzugsweise Acrylnitril-Butadien-Styrol-Copolymerisat (ABS), gefertigt sein. Dieses Material weist eine hohe Widerstandsfähigkeit für die gewünschte Verwendung auf und lässt sich ohne weiteres biegen, wenn es auf Temperaturen deutlich über 100° C erwärmt wird.

Je nach der Gestaltung des entsprechenden Rahmenelements kann das Rahmenelement oder das äußere Teilprofil im Bereich wenigstens eines Eckabschnitts eine Ausnehmung aufweisen, so dass der wenigstens eine Eckabschnitt leichter biegbar ist. Mit der Aussparung wird letztlich für das Biegen überschüssiges Material entfernt. Es kommt daher im Eckabschnitt nicht zu einer störenden Faltenbildung. Vorzugsweise ist die Ausnehmung im lang gestreckten Zustand des Rahmenelements bzw. des äußeren Teilprofils V-förmig. Die Ränder der Ausnehmung verlaufen dabei etwa in einem Winkel, der etwas größer ist als der Winkel der Biegung. So liegen die Ränder nach dem Biegen fast aneinander, behindern sich aber nicht.

Das Rahmenelement, das wenigstens eine innere Teilprofil und/oder das äußere Teilprofil kann aber auch aus einem metallischen Werkstoff gefertigt sein. Dies kann kalt verformt oder aber bevorzugt warm verformt sein. Insbesondere kommt als wärmeformbares metallisches Material Aluminium in Betracht.

Nach einer weiteren Ausgestaltung der Erfindung ist wenigstens eine externe Ausstattungskomponente etwa in Form eines Scharniers oder eines Ladebordwandprofils zur Aufnahme und/oder Abdichtung einer Ladebordwand befestigt. Dies kann im Sinne einer Vorkonfektionierung vor dem Umbiegen der Eckabschnitte erfolgen. Das Rahmenelement ist dann noch lang gestreckt und einfach sowie platzsparend zu handhaben. Die Montageschritte an dem gebogenen Rahmenelement können somit minimiert werden.

In diesem Zusammenhang kann wenigstens eine Verbindung zum Verbinden der wenigstens einen externen Ausstattungskomponente mit dem wenigstens einen inneren Teilprofil und dem äußeren Teilprofil untereinander vorgesehen sein. Dadurch wird die notwendige Anzahl von Montageschritten reduziert, denn durch das Vorsehen einer Schraubverbindung kann lokal die maximale Anzahl separater Komponenten miteinander verbunden werden.

Im Zusammenhang mit einem Hohlprofil ist es zweckmäßig, wenn im Hohlprofil wenigstens eine interne Ausstattungskomponente aufgenommen ist. Auf diese Weise können die internen Ausstattungskomponenten einfach und schnell in das Rahmenelement integriert werden. Bei den internen Ausstattungskomponenten handelt es sich um Komponenten, die hauptsächlich in das Hohlprofil integriert werden und dabei von außen überwiegend nicht sichtbar sind. Bei den internen Ausstattungskomponenten kann es sich beispielsweise um Eckverstärker oder aber auch um Beleuchtungseinrichtungen handeln, wobei insbesondere die Beleuchtungseinrichtungen teilweise aus dem Hohlprofil herausgeführt sein können. Dazu sind im Hohlprofil gegebenenfalls entsprechende Ausnehmungen vorgesehen. Bei den Eckverstärkern handelt es sich vorzugsweise um solche, die sich über einen zu verstärkenden Eckabschnitt erstrecken und somit eine Art Knick oder dergleichen aufweisen.

Die internen Ausstattungskomponenten sind bevorzugt wenigstens an dem äußeren Teilprofil oder dem wenigstens einen inneren Teilprofil befestigt. Dadurch wird letztlich eine Vorkonfektionierung ermöglicht, bei der die entsprechenden internen Ausstattungskomponenten vor dem Verbinden der Teilprofile untereinander mit einem Teilprofil verbunden werden. Das kann deutlich einfacher und schneller erfolgen als das Einbringen der internen Ausstattungskomponenten in das bereits fertige Rahmenelement. Beim Verbinden der Teilprofile werden die internen Ausstattungskomponenten letztlich automatisch in das Hohlprofil integriert, wobei gleichzeitig eine endgültige Fixierung der internen Ausstattungskomponenten erfolgen kann. Als Verbindung kommt insbesondere eine Schraubverbindung in Frage.

Dabei bietet es sich insbesondere an, wenn wenigstens eine Verbindung zum Verbinden der wenigsten einen internen Ausstattungskomponente des wenigstens einen internen Teilprofils und des äußeren Teilprofils miteinander vorgesehen ist. In diesem Fall wird beispielsweise eine Vorkonfektionierung derart durchgeführt, dass eine Ausstattungskomponente in ein entsprechendes Teilprofil ohne endgültige Fixierung eingebracht wird. Die interne Ausstattungskomponente kann beispielsweise im entsprechenden Teilprofil mehr oder weniger formschlüssig gehalten sein. Die endgültige Fixierung erfolgt dann erst beim Verbinden des wenigstens einen inneren Teilprofils und des äußeren Teilprofils, wobei die Fixierung der Teilprofile untereinander sowie der jeweiligen wenigstens einen internen Ausstattungskomponente in einem einzigen Arbeitsschritt etwa durch Verschrauben erfolgt.

Zur weiteren Vereinfachung und Beschleunigung der Montage kann dann wenigstens eine Verbindung zum Befestigen einerseits der wenigstens einen internen Ausstattungskomponente und andererseits der externen Ausstattungskomponente am Rahmenelement sowie andererseits zum Verbinden des wenigstens einen inneren Teilprofils und des äußeren Teilprofils miteinander vorgesehen sein. Dies bedeutet, dass insbesondere dort, wo interne und externe Ausstattungskomponenten überlappend am Hohlprofil vorgesehen werden sollen, eine einzige Verbindung, vorzugsweise Schraubverbindung, ausreicht, um an der entsprechenden Stelle des Rahmenelements die Teilprofile untereinander aber auch die internen und externen Ausstattungskomponenten mit dem Hohlprofil zu verbinden.

Nachfolgend wird die Erfindung anhand einer lediglich Ausführungsbeispiele darstellenden Zeichnung näher erläutert.

### Es zeigen:

- Fig. 1: ein Nutzfahrzeug mit einem ein der Rückseite zugeordnetes Rahmenelement aufweisenden Kofferaufbau;
- Fig. 2: ein Detail des Rahmenelements aus Fig. 1 im Bereich eines Eckabschnitts;
- Fig. 3: ein zweites Rahmenelement mit einer Beleuchtungseinrichtung in einer Schnittansicht entlang einer Schnittebene senkrecht zu einem Dachabschnitt des Rahmenelements;
- Fig. 4: das Rahmenelement aus Fig. 2 in einer Schnittansicht entlang einer Schnittebene senkrecht zu einem Seitenwandabschnitt auf Höhe eines Scharniers;
- Fig. 5: ein drittes Rahmenelement mit einem Ladebordwandprofil in einer Schnittansicht entlang einer Schnittebene senkrecht zu einem Seitenwandabschnitt des Rahmenelements;
- Fig. 6: ein viertes Rahmenelement zur Verwendung mit einem Rolltor in einer Schnittansicht entlang einer Schnittebene senkrecht zu einem Seitenwandabschnitt des Rahmenelements;
- Fig. 7: ein unfertiges fünftes Rahmenelement in einem lang gestreckten Zustand vor dem Anbringen von Ausstattungskomponenten in Draufsicht;
- Fig. 8: das Rahmenelement aus Fig. 7 vor dem Umbiegen im Bereich der Eckabschnitte und
- Fig. 9: das fertige Rahmenelement aus Fig. 8 nach dem Umbiegen im Bereich der Eckabschnitte.

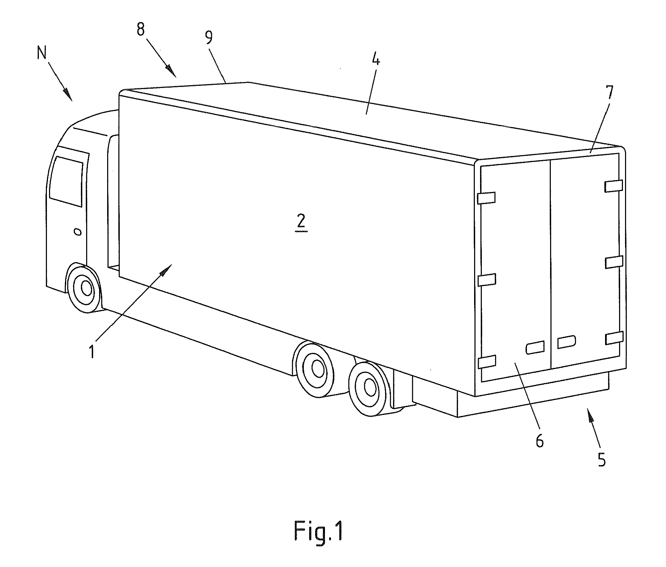

In der Fig. 1 ist ein Nutzfahrzeug N mit einem Kofferaufbau 1 schematisch dargestellt. Bei dem Nutzfahrzeug N handelt es sich um einen Lastkraftwagen, welcher den Kofferaufbau 1 unmittelbar trägt. Der Kofferaufbau weist zwei gegenüberliegende Seitenwandpaneele 2, 3, ein Dachpaneel 4 und einen nicht näher dargestellten Boden auf. Zudem ist an der Rückseite 5 eine im dargestellten Ausführungsbeispiel durch Türen 6 gebildete Rückwand R vorgesehen, die über einen Rückwandrahmen 7 mit dem Dachpaneel 4 und den gegenüberliegenden Seitenwandpaneelen 2, 3 verbunden ist. An der Stirnseite 8 ist eine nicht im Einzelnen dargestellte Stirnwand vorgesehen, die mittels eines nur ansatzweise dargestellten Stirnwandrahmens 9 am Kofferaufbau festgelegt ist.

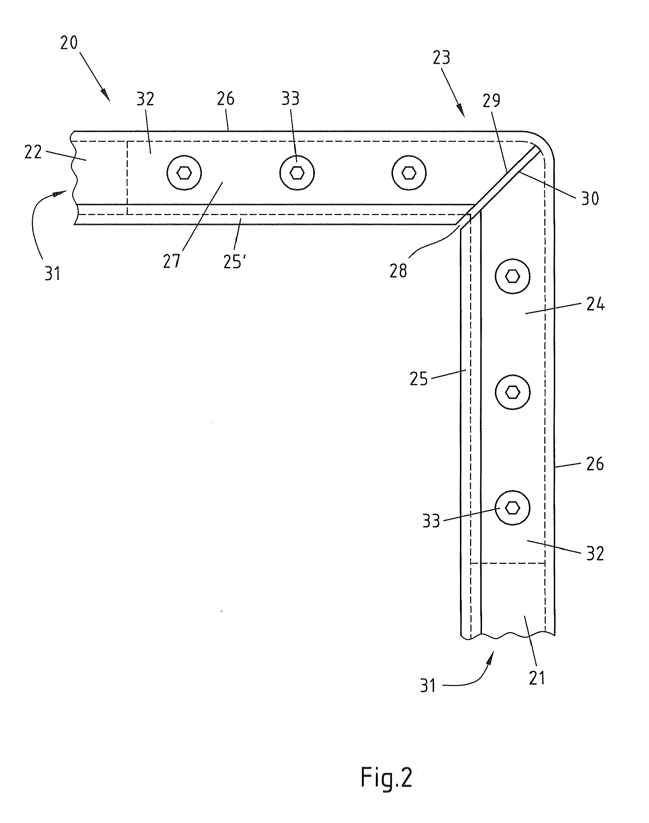

In der Fig. 2 ist eine Detail eines Rahmenelements 20 des Rückwandrahmens 7 des in Fig. 1 gezeigten Kofferaufbaus dargestellt. Bei dem dargestellten Rahmenelement 20 erstreckt sich vertikal ein Teil eines Seitenwandabschnitts 21, während sich horizontal ein Teil eines Dachabschnitts 22 erstreckt. Der Seitenwandabschnitt 21 und der Dachabschnitt 22 des Rahmenelements 20 stoßen in einem Eckabschnitt 23 aufeinander, in dem das Rahmenelement 20 nicht unterbrochen ist und einen erkennbaren Radius aufweist. Dieser Radius ist durch Biegen geformt. Dies bedeutet, dass das Rahmenelement 20 ursprünglich als lang gestrecktes Profil vorgelegen hat. Erst im Verlaufe der Fertigung des Rahmenelements 20 ist dieses in den Eckabschnitten 23 umgebogen worden. Dabei verläuft die Biegeachse senkrecht zur Zeichenebene und damit senkrecht zu einer von dem Dachabschnitt 22 und dem wenigstens einen Seitenwandabschnitt 21 aufgespannten Ebene. Mit anderen Worten kann die Biegeachse auch als im Wesentlichen senkrecht sowohl zu dem Dachabschnitt 22 als auch zu dem benachbarten Seitenwandabschnitt 21 beschrieben werden.

Das in der Fig. 2 dargestellte Rahmenelement 20 ist im Wesentlichen als Hohlprofil ausgeführt, auch wenn das Hohlprofil nicht vollständig geschlossen sein muss. Insbesondere ist das Hohlprofil aber im Wesentlichen geschlossen. Das Hohlprofil setzt sich dabei aus einem dem Äußeren des Kofferaufbaus 1 zugewandten äußeren Teilprofil 24 und wenigstens einem dem Inneren des Kofferaufbaus 1 zugewandten inneren Teilprofil 25 des Kofferaufbaus 1 zusammen. In dem in der Fig. 2 gezeigten Detail sind zwei separate innere Teilprofile 25, 25' dargestellt, während das äußere Teilprofil 24 sich ununterbrochen entlang des gesamten Eckabschnitts 23 erstreckt.

Auch an dem nicht im Detail der Fig. 2 dargestellten Seitenwandabschnitt ist ein separates inneres Teilprofil vorgesehen. Die inneren Teilprofile 25, 25' können auf das äußere Teilprofil 24 aufgestreckt sein. Das äußere Teilprofil 24 bildet zudem umlaufend entlang des Rückwandrahmens 7 einen Teil der äußeren Hülle des Kofferaufbaus 1. Analog bildet jedes der inneren Teilprofile 25, 25' einen Teil der inneren, also der zum Innenraum des Kofferaufbaus 1 gerichteten Hülle.

Sowohl bei den inneren Teilprofilen 25, 25' als auch bei dem äußeren Teilprofil 24 handelt es sich jeweils um ein stranggepresstes Aluminiumprofil mit einer Profilgeometrie, die beispielsweise das Ineinanderstecken der Teilprofile 24, 25, 25' ermöglicht. Die inneren Teilprofile 25, 25' und das äußere Teilprofil 24 werden also nicht als bandförmiges Material hergestellt, das sich dann leichter biegen ließe. Aus diesem Grund ist das äußere Teilprofil 24 nur im äußeren Bereich 26 angrenzend zu dem Dachpaneel und dem Seitenwandpaneel durchgängig ausgebildet. Dagegen ist der rückwärtigen Teil 27 des äußeren Teilprofils 24 im dargestellten Ausführungsbeispiel unterbrochen, denn in das äußere Teilprofil 24 wurde vor dem Umbiegen im Eckabschnitt 23 eine V-förmige Ausnehmung eingebracht. Die Ränder 29, 30 der Ausnehmung 28 verlaufen bei dem in der Fig. 2 dargestellten Ausführungsbeispiel im Wesentlichen parallel zueinander und schließen den Rückwandrahmen 7 so möglichst gut nach außen ab. Nicht im Einzelnen dargestellt ist, dass die Lücke zwischen den beiden Rändern 29, 30 der Ausnehmung 28 auch durch eine Dichtung geschlossen sein könnte.

Das dargestellte Ausführungsbeispiel des Rahmenelements 20 weist in dem Hohlraum 31 des durch das äußere Teilprofil 24 und die inneren Teilprofile 25, 25' geschaffenen Hohlprofils einen Eckverstärker 32 auf, der im Eckabschnitt 23 des dargestellten Rahmenelements 20 angeordnet ist. Der Eckverstärker 32 ist in Form eines Winkelprofils ausgebildet, dessen Ecke mit der Ecke des Eckabschnitts 23 im Wesentlichen übereinstimmt. Fixiert ist der Eckverstärker 32 an dem äußeren Teilprofil 24, und zwar über eine Reihe von Schraubverbindungen 33.

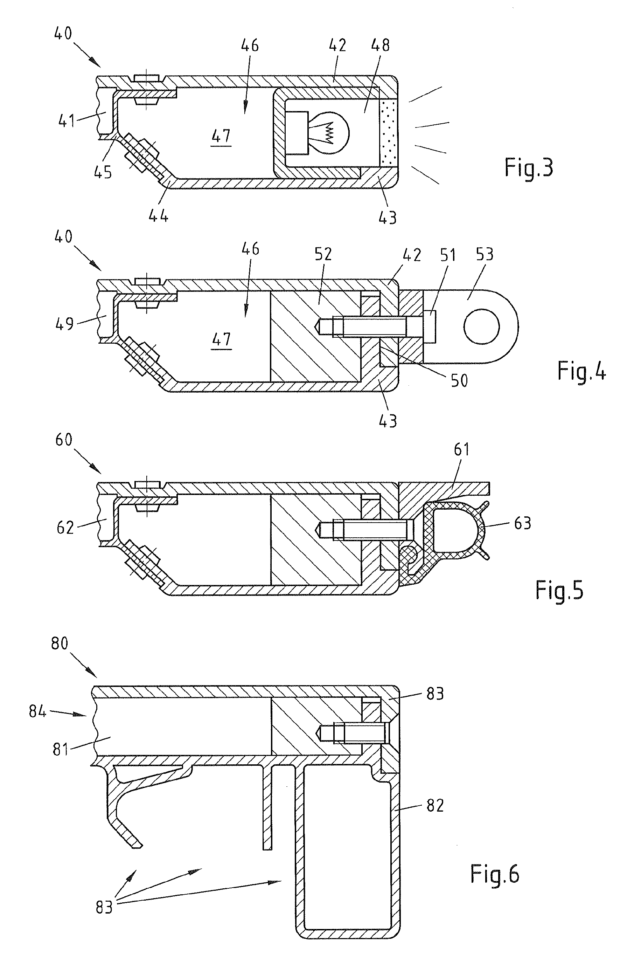

In der Fig. 3 ist ein Schnitt durch ein weiteres Rahmenelement 40 in Form eines Rückwandrahmens dargestellt. Der Schnitt verläuft senkrecht zum Dachabschnitt 41 des Rahmenelements 40. Das Rahmenelement 40 setzt sich ebenfalls aus einem äußeren Teilprofil 42 und einem inneren Teilprofil 43 zusammen. Das innere Teilprofil 43 besteht seinerseits wiederum aus dem Grundprofil 44 und einem Zusatzprofil 45, welches zum Verbindung mit einem Dachpaneel und/oder einem Seitenwandpaneel dient und an das Grundprofil 44 genietet ist.

Die eigentliche Verbindung des Rahmenelements 40 mit dem benachbarten Seitenwandpaneel oder Dachpaneel ist in der Fig. 2 nicht im Einzelnen dargestellt, da diese Verbindung im Zusammenhang mit der Erfindung nur eine untergeordnete Rolle spielt.

Das innere Teilprofil 43 und das äußere Teilprofil 42 bilden zusammen ein Hohlprofil 46. Das Hohlprofil 46 bildet einen Hohlraum 47, in dem eine interne Ausstattungskomponente in Form einer Beleuchtungseinrichtung 48 aufgenommen ist. Bei der Beleuchtungseinrichtung 48 kann es sich etwa um Rücklichter oder Rückfahrscheinwerfer handeln.

In der Fig. 4 ist dasselbe Rahmenelement 40 wie in Fig. 2 nur in einem Schnitt senkrecht zum Seitenwandabschnitt 49 des Rahmenelements 40 dargestellt. An der Rückseite des Hohlprofils 46 überlappen die beiden Teilprofile 42, 43. Das innere und das äußere Teilprofil 42, 43 sind im Bereich dieser Überlappung 50 über eine Schraubverbindung 51 miteinander verbunden. Im Hohlraum 47 des Hohlprofils 46 ist als weitere interne Ausstattungskomponente ein Eckverstärker 52 vorgesehen. Außerhalb des Hohlprofils 46 ist an diesem eine äußere Ausstattungskomponente in Form eines Scharniers 53 angebracht. Bei dem dargestellten Rahmenelement 40 wird über die Schraubverbindung 51 einerseits der Eckverstärker 52 und das Scharnier 53 am Hohlprofil fixiert und andererseits das innere Teilprofil 43 und das äußere Teilprofil 42 miteinander zum Hohlprofil 46 verbunden.

Bei dem in der Fig. 5 dargestellten Rahmenelement 60 ist im Unterschied zum in Fig. 4 dargestellten Rahmenelement 40 als externe Ausstattungskomponente ein Ladebordwandprofil 61 vorgesehen, das sich im Wesentlichen entlang des gesamten Seitenwandabschnitts 62 erstreckt. Das Ladebordwandprofil 61 dient zur Aufnahme sowie Abdichtung einer Ladebordwand. Hierzu weist das Ladebordwandprofil 61 eine entsprechende Dichtung 63 auf. Im Übrigen sind die in Fig. 4 und 5 dargestellten Rahmenelemente 40, 60 gleich aufgebaut.

Das in der Fig. 6 dargestellte Rahmenelement 80 in Form eines Rückwandrahmens unterscheidet sich von den in den Fig. 3 bis 5 dargestellten Rahmenelementen 40, 60 zum einen dadurch, dass das Hohlprofil 81, das ebenfalls aus einem inneren Teilprofil 82 und einem äußeren Teilprofil 83 zusammengesetzt ist, eine Öffnung 84 zum entsprechenden, nicht dargestellten Seitenwandpaneel hin aufweist. Das Hohlprofil 81 ist also nicht vollständig geschlossen. Zum anderen unterscheidet sich das Rahmenelement 80 durch das innere Teilprofil 82 von den in den Fig. 3 bis 5 dargestellten Rahmenelementen 40, 60. Das innere Teilprofil 82 weist Mittel 83 zum Führen eines Rolltors auf.

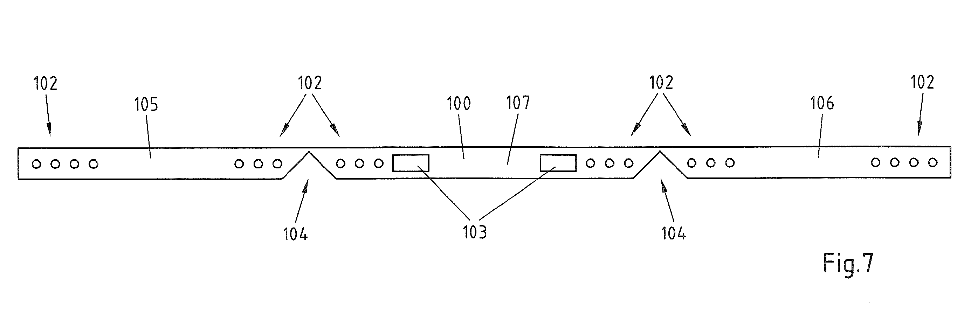

In der Fig. 7 ist ein äußeres Teilprofil 100 eines Rahmenelements 101 in einem lang gestreckten Zustand dargestellt, bevor die Ecken des Rahmenelements 101 durch Umbiegen hergestellt sind. Das äußere Teilprofil 100 wird zunächst mit einem speziell auf das herzustellende Rahmenelement 101 abgestimmten Bohrbild versehen. Zudem werden an zuvor für den Einzelfall festgelegten Bereichen Aussparungen 103 für Beleuchtungseinrichtungen vorgesehen.

In das äußere Teilprofil 100 werden ferner etwa durch Fräsen V-förmige Ausnehmungen 104 eingebracht. Diese unterteilen das äußere Teilprofil 100 in zwei äußere Seitenwandabschnitte 105, 106 und einen Dachabschnitt 107, die zusammen das einstückige, extrudierte äußere Teilprofil 100 bilden.

In diesem noch handlichen, lang gestreckten Zustand des äußeren Teilprofils 100 werden entsprechend dem Bohrbild bestimmte interne und externe Ausstattungskomponenten angebracht, was in der Fig. 7 dargestellt ist. In dem dort dargestellten Zustand des äußeren Teilprofil 100 sind bereits an den Seitenwandabschnitten 105, 106 innere Teilprofile 108, 109 angebracht, die über gemeinsame Verbindungen 110 mit internen Ausstattungskomponenten und dem äußeren Teilprofil 100 verbunden, insbesondere verschraubt sind. Bei diesen internen Ausstattungskomponenten handelt es sich um Verstärkerelemente 112 zur Verstärkung der unteren Seitenwandabschnitte, Eckverstärker 112 zur Verstärkung der Eckabschnitte 113 und Beleuchtungseinrichtungen 114. Teilweise sind mit den gemeinsamen Verschraubungen auch noch externe Ausstattungskomponenten in Form von Scharnieren 115 mit einerseits den internen Ausstattungskomponenten und andererseits den inneren Teilprofilen 108, 109 und dem äußeren Teilprofil 100 verbunden.

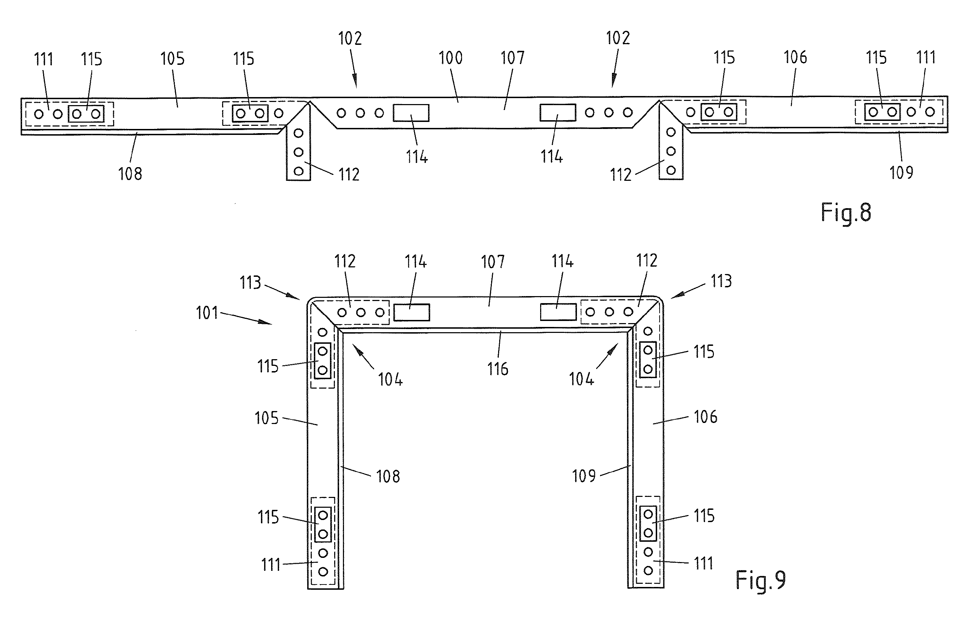

Das Umbiegen erfolgt um die bereits mit jeweils einem Schenkel befestigten Eckverstärker 122 herum, die letztlich ein Teil des dafür benötigten Werkzeugs bilden. Zum Zwecke des Umbiegens werden wenigstens das äußere Teilprofil 100 erwärmt. Dies gilt insbesondere dann, wenn das äußere Teilprofil 100 aus einem thermoplastischen Kunststoff gefertigt ist. Nach dem Umbiegen des äußeren Teilprofils 100 werden die Eckverstärker 112 mit dem Dachabschnitt 107 des äußeren Teilprofils 100 verschraubt. Danach oder noch besser gleichzeitig wird das dem Dachabschnitt zugeordnete innere Teilprofil 116 montiert. Auf diese Weise wird das in der Fig. 9 dargestellte Rahmenelement 101 erhalten.

Alternativ kann das Rahmenelement vor dem Biegen bereits ein, vorzugsweise aus einem äußeren Teilprofil und einem inneren Teilprofil zusammengesetztes Hohlprofil sein. Dann werden V-förmige Ausnehmungen in das Hohlprofil eingebracht und das Hohlprofil als solches in den Eckabschnitten umgebogen. Dies ist einfacher als die Montage der einzelnen inneren Teilprofile in unterschiedlichen Fertigungsschritten. Allerdings ist dann eine entsprechende Vorkonfektionierung in gleichem Umfang nicht oder nur mit einem höheren Aufwand möglich. Dies gilt insbesondere hinsichtlich der Befestigung der einzelnen Ausstattungskomponenten, des äußeren Teilprofils und des inneren Teilprofils untereinander.

## Patentansprüche

1. Kofferaufbau (1) eines Nutzfahrzeugs (N), mit zwei Seitenwandpaneelen (2), einem Dachpaneel (4) und wenigstens einem einer Stirnseite (8) und/oder einer Rückseite (5) des Kofferaufbaus (1) zugeordneten Rahmenelement (20, 40, 60, 101), wobei das Rahmenelement (20, 40, 60, 101) zwei sich entlang der Seitenwandpaneele (2) erstreckende Seitenwandabschnitte (49, 62, 105, 106) und einen sich entlang des Dachpaneels erstreckenden Dachabschnitt (4) aufweist und wobei der Dachabschnitt (22, 41, 107) an gegenüber liegen Enden jeweils durch einen Eckabschnitt (23, 113) mit einem Seitenwandabschnitt (49, 62, 105, 106) verbunden ist,
**dadurch gekennzeichnet, dass** jeder Eckabschnitt (23, 113) durch Biegen um eine Achse senkrecht sowohl zum benachbarten Seitenwandabschnitt (49, 62, 105, 106) als auch zum Dachabschnitt (22, 41, 107) geformt ist.

2. Kofferaufbau nach Anspruch 1, **dadurch**
**gekennzeichnet, dass** das Rahmenelement (20, 40, 60, 101) ein im Wesentlichen geschlossenes Hohlprofil (46, 81) umfasst.

3. Kofferaufbau nach Anspruch 1 oder 2, **dadurch**
**gekennzeichnet, dass** das Rahmenelement (20, 40, 60, 101) aus einem äußeren Teilprofil (24, 42, 83, 100) und wenigstens einem inneren Teilprofil (25, 25', 43, 82, 108, 109, 116) zusammengesetzt ist.

4. Kofferaufbau nach Anspruch 3, **dadurch**
**gekennzeichnet, dass** das äußere Teilprofil (24, 42, 83, 100) einen Teil einer äußeren Hülle des Kofferaufbaus (1) bildet.

5. Kofferaufbau nach Anspruch 2 oder 3, **dadurch**
**gekennzeichnet, dass** das wenigstens eine innere Teilprofil (25, 25', 43, 82, 108, 109, 116) einen Teil einer inneren Hülle des Kofferaufbaus (1) bildet.

6. Kofferaufbau nach einem der voranstehenden Ansprüche,
**dadurch gekennzeichnet, dass**
das Rahenelement (20, 40, 60, 101) oder das äußere Teilprofil (24, 42, 83, 100) aus einem lang gestreckten Profil durch Umbiegen des Profils im Bereich der Eckabschnitte (23, 113) im Wesentlichen um 90° gefertigt ist.

7. Kofferaufbau nach einem der voranstehenden Ansprüche,
**dadurch gekennzeichnet, dass**
das Rahmenelement (20, 40, 60, 101), das äußere Teilprofil (24, 42, 83, 100) und/oder das wenigstens eine innere Teilprofil (25, 25', 43, 82, 108, 109, 116) stranggepresst oder extrudiert ist.

8. Kofferaufbau nach einem der voranstehenden Ansprüche,
**dadurch gekennzeichnet, dass**
das Rahmenelement (20, 40, 60, 101) oder das äußere Teilprofil (24, 42, 83, 100) an den Eckabschnitten (23, 113) jeweils eine Ausnehmung (28, 104) zur Vereinfachung der Biegung aufweist.

9. Kofferaufbau nach einem der voranstehenden Ansprüche,
**dadurch gekennzeichnet, dass** das Rahmenelement (20, 40, 60, 101), das äußere Teilprofil (24, 42, 83, 100) und/oder das wenigstens eine innere Teilprofil (25, 25', 43, 82, 108, 109, 116) aus einem thermoplastischen Kunststoffmaterial, vorzugsweise Acrylnitril-Butadien-Styrol-Copolymerisat (ABS), gefertigt ist.

10. Kofferaufbau nach einem der voranstehenden Ansprüche,
**dadurch gekennzeichnet, dass** das Rahmenelement (20, 40, 60, 101), das äußere Teilprofil (24, 42, 83, 100) und/oder das wenigstens eine innere Teilprofil (25, 25', 43, 82, 108, 109, 116) aus einem wärmeformbaren metallischen Werkstoff, vorzugsweise aus Aluminium gefertigt ist.

11. Kofferaufbau nach einem der Ansprüche 3 bis 10,
**dadurch gekennzeichnet, dass**
am Rahmenelement (20, 40, 60, 101) wenigstens eine externe Ausstattungskomponente, vorzugsweise ein Scharnier (53) oder ein Ladebordwandprofil (61) zur Aufnahme und/oder Abdichtung einer Ladebordwand, befestigt ist.

12. Kofferaufbau nach Anspruch 11, **dadurch**
**gekennzeichnet, dass** wenigstens eine Verbindung (33, 51) zum Verbinden des äußeren Teilprofils (24, 42, 83, 100) des wenigstens einen inneren Teilprofils (25, 25', 43, 82, 108, 109, 116) und der wenigstens einen externen Ausstattungskomponente miteinander vorgesehen ist.

13. Kofferaufbau nach einem der Ansprüche 3 bis 12,
**dadurch gekennzeichnet, dass**
im Hohlprofil (46, 81) wenigstens eine interne Ausstattungskomponente, vorzugsweise ein Eckverstärker (32, 52) und/oder eine Beleuchtungseinrichtung (48), aufgenommen ist.

14. Kofferaufbau nach Anspruch 13, **dadurch**
**gekennzeichnet, dass** wenigstens eine Verbindung (33, 51) zum Verbinden des äußeren Teilprofils (24, 42, 83, 100) des wenigstens einen inneren Teilprofils (25, 25', 43, 82, 108, 109, 116) und der wenigstens einen internen Ausstattungskomponente miteinander vorgesehen ist.

15. Kofferaufbau nach Anspruch 14, **dadurch**
**gekennzeichnet, dass** wenigstens eine Verbindung (33, 51) einerseits zum Befestigen der wenigsten einen internen Ausstattungskomponente und der wenigstens einen externen Ausstattungskomponente am Rahmenprofil (20, 40, 60, 101) und andererseits zum Verbinden des äußeren Teilprofils (24, 42, 83, 100) und des wenigstens einen inneren Teilprofils (25, 25', 43, 82, 108, 109, 116) miteinander vorgesehen ist.
